# EUROPÄISCHE PATENTANMELDUNG

(11) **EP 1 801 535 A2**
(43) Veröffentlichungstag der Anmeldung: **27.06.2007**
(21) Anmeldenummer: 06024195.7
(22) Anmeldetag: 22.11.2006
(51) Int. Cl.: G01B 5/016

(54) **Magnetkupplung, insbesondere zum Arretieren eines Drehgelenks bei einem Koordinatenmessgerät**

(30) Priorität: 20.12.2005 DE 102005063242
(71) Anmelder: Carl Zeiss Industrielle Messtechnik GmbH, 73447 Oberkochen (DE)
(72) Erfinder: Enderle, Eckhard, 73434 Aalen (DE)
(74) Vertreter: Duhme, Torsten

(57) **Zusammenfassung**

Eine Magnetkupplung, die insbesondere zum Arretieren eines Drehgelenks beim einem Koordinatenmessgerät dient, besitzt einen ersten Kupplungsteil (26) und einen relativ dazu beweglichen zweiten Kupplungsteil (28). Ein Magnet (42) ist derart an dem ersten Kupplungsteil (26) angeordnet, dass er zwischen einer ersten und einer zweiten Position bewegbar ist. In der zweiten Position haftet der Magnet (42) an dem zweiten Kupplungsteil (28), um eine Haltekraft zwischen dem ersten und dem zweiten Kupplungsteil (26, 28) zu erzeugen. Ein zweiter Magnet (38, 40) ist dazu ausgebildet, den ersten Magneten (42) in zumindest eine der Positionen zu bewegen. In der ersten Position haftet der Magnet (42) an dem ersten Kupplungsteil (26).

## Beschreibung

Die vorliegende Erfindung betrifft eine Magnetkupplung, insbesondere zum Arretieren eines Drehgelenks bei einem Koordinatenmessgerät, mit einem ersten Kupplungsteil und einem relativ dazu beweglichen zweiten Kupplungsteil, mit zumindest einem ersten Magneten, der an dem ersten Kupplungsteil derart angeordnet ist, dass er zwischen einer ersten und einer zweiten Position bewegbar ist, wobei der erste Magnet in der zweiten Position an dem zweiten Kupplungsteil magnetisch anhaftet, um eine Haltekraft zwischen dem ersten und dem zweiten Kupplungsteil zu erzeugen, und mit einem zweiten Magneten, der dazu ausgebildet ist, den ersten Magneten in zumindest eine der Positionen zu bewegen.

Eine solche Magnetkupplung ist aus DE 34 34 116 A1 bekannt.

Die vorliegende Erfindung ist nicht auf Magnetkupplungen im engeren Sinne beschränkt. Sie betrifft vielmehr alle vergleichbaren Anordnungen mit zwei relativ zueinander beweglichen Teilen, die wahlweise mit Hilfe eines ersten Magneten gekoppelt werden können, um eine Relativbewegung zwischen den beiden Teilen zu übertragen, zu bremsen und/oder zumindest weitgehend zu unterbinden. Dementsprechend betrifft die vorliegende Erfindung ebenso magnetische Bremsen und vor allem magnetische Klemmvorrichtungen, die dazu dienen, ein bewegliches Teil in einer definierten Ruheposition zu halten. Der Einfachheit halber wird im folgenden jedoch ganz allgemein von einer Magnetkupplung gesprochen, wobei der Begriff im Sinne der vorhergehenden Definition zu verstehen ist.

Ein besonders bevorzugtes Anwendungsgebiet der vorliegenden Erfindung ist die Klemmung oder Arretierung eines um eine Drehachse verschwenkbaren Taststiftes an einem Koordinatenmessgerät. Darüber hinaus kann die vorliegende Erfindung jedoch auch zum Abbremsen und/oder Unterbinden von linearen Bewegungen und auch bei allen anderen Anwendungen eingesetzt werden, bei denen eine drehbare Welle wahlweise mit einem relativ dazu feststehenden Teil gekoppelt werden soll.

Ein Koordinatenmessgerät, bei dem die vorliegende Erfindung besonders vorteilhaft eingesetzt werden kann, ist beispielsweise in EP 0 790 478 A2 beschrieben. Das Koordinatenmessgerät (KMG) besitzt einen Tastkopf, an dem ein Taststift angeordnet ist, der um eine Drehachse verschwenkbar ist. Der Taststift dient dazu, ausgewählte Messpunkte an einem Messobjekt anzutasten. Dazu ist der Tastkopf an einer Verschiebemechanik gelagert, die es ermöglicht, den Tastkopf im Raum zu bewegen. Aus der Position des Tastkopfes und des Taststiftes beim Antasten eines Messpunktes können dann die Raumkoordinaten des Messpunktes bestimmt werden. Die Auswertung mehrerer Raumkoordinaten ermöglicht es, geometrische Parameter des Messobjektes zu bestimmen.

Es ist leicht einzusehen, dass die Messgenauigkeit eines Koordinatenmessgerätes unter anderem davon abhängt, wie genau die Positionen des Tastkopfes und des verschwenkbaren Taststiftes eingestellt und gehalten werden können. Ein verschwenkbarer Taststift muss daher so fest in seiner eingestellten Schwenkposition arretiert werden, dass diese Position auch unter dem Einfluss der Schwerkraft und den kinematischen Belastungen beim Verfahren des Tastkopfes gehalten wird. Andererseits darf die Arretierung nicht dazu führen, dass der Taststift aufgrund einer zu starken Klemmung von der vorgesehenen Position abweicht. Auch eine Belastung der Lager ist möglichst zu vermeiden, da sie die Genauigkeit des Koordinatenmessgerätes beeinflusst.

Im Stand der Technik sind eine Vielzahl von Magnetbremsen bekannt, beispielsweise aus EP 0 611 114 A1, DE 199 23 393 C1, DE 36 20 797 A1, DE 35 13 494 A1, DE 2 017 426 A oder DE 37 25 854 A1. Die bekannten Magnetbremsen verwenden üblicherweise einen Permanentmagneten, dessen Magnetfeld mit Hilfe eines Elektromagneten verstärkt oder abgeschwächt werden kann. Durch Betätigung des Elektromagneten ist es dann möglich, die Magnetbremse von einem Zustand, beispielsweise Bremse geöffnet, in den anderen Zustand, also Bremse geschlossen, umzuschalten. Nachteilig an all diesen Magnetbremsen ist jedoch, dass zumindest einer der beiden Zustände nur gehalten werden kann, solange der Elektromagnet bestromt wird. Mit anderen Worten ist ein Dauerstrom erforderlich, um die bekannten Magnetbremsen in zumindest einem der Zustände zu halten. Ein Dauerstrom führt zu einer Erwärmung des Elektromagneten. Bei einem Koordinatenmessgerät kann eine solche Erwärmung die Messgenauigkeit beeinträchtigen, weil sich die erwärmten Teile ausdehnen. Die bekannten Magnetbremsen sind daher für die bevorzugte Anwendung bei einem Koordinatenmessgerät nur eingeschränkt geeignet.

Die eingangs genannte DE 34 34 116 A1 offenbart eine Magnetbremse, die diesen Nachteil vermeidet. Sie besitzt einen Permanentmagneten, der mit Hilfe von Tellerfedern in einer ersten Position vorgespannt ist. Mit Hilfe eines konzentrisch zu dem Permanentmagneten angeordneten Elektromagneten kann die Magnetkraft verstärkt oder abgeschwächt werden. Die Federkraft der Tellerfedern ist so eingestellt, dass sie betragsmäßig zwischen der Anzugskraft des Permanentmagneten im gelösten Zustand und der Haltekraft des Permanentmagneten im anhaftenden Zustand liegt. In Folge dessen genügt ein kurzer Stromimpuls durch den Elektromagneten, um den Permanentmagneten zwischen der gelösten ersten und der anhaftenden zweiten Position zu bewegen. Diese bekannte Magnetbremse besitzt jedoch den Nachteil, dass die Kraft der Tellerfedern axial auf die Lager zurückwirkt, was die Positioniergenauigkeit zumindest langfristig beeinträchtigen kann. Darüber hinaus wirkt die Federkraft der Tellerfedern gegen die Haltekraft des Permanentmagneten im anhaftenden Zustand, so dass ein relativ starker und damit großer und schwerer Permanentmagnet benötigt wird.

Aus DE 197 52 543 A1 ist keine andere Magnetbremse bekannt, die sich durch einen kurzen Stromimpuls von einem Zustand in den anderen Zustand umschalten lässt. In diesem Fall wird eine Ankerscheibe mit einem Bremsbelag aufgrund der Federkraft einer Schraubendruckfeder gegen eine Kupplungsscheibe gepresst. Konzentrisch zu der Schraubendruckfeder sind ein ringförmiger Permanentmagnet und ringförmige Erregerspulen von zwei Elektromagneten angeordnet. Aufgrund eines Luftspalts zwischen Ankerscheibe und Permanentmagnet reicht die Anzugskraft des Permanentmagneten nicht aus, um die Ankerscheibe gegen die Kraft der Druckfeder anzuziehen. Mit Hilfe der Elektromagneten kann jedoch eine zusätzliche Magnetkraft erzeugt werden, die die Ankerplatte gegen die Kraft der Druckfeder anzieht. Sobald der Luftspalt zwischen Permanentmagnet und Ankerplatte verschwunden ist, reicht die Anzugskraft des Permanentmagneten aus, um die Ankerplatte gegen die Kraft der Druckfeder zu halten. Auch in diesem Fall besteht die Gefahr, dass die Rückwirkung der Schraubendruckfeder die Lagergenauigkeit der Magnetbremse beeinträchtigt. Drüber hinaus ist auch diese bekannte Magnetbremse relativ großbauend, was ihre Integration in ein Drehgelenk eines Tastkopfes schwierig macht.

Vor diesem Hintergrund ist es eine Aufgabe der vorliegende Erfindung, eine Magnetkupplung der eingangs genannten Art anzugeben, die in beiden Betriebszuständen stromlos ist und die zudem nur eine geringe Querkraft auf die Lager ausübt. Darüber hinaus soll die neue Magnetkupplung möglichst kleinbauend sein, um sie insbesondere zum Arretieren eines Drehgelenks bei einem Koordinatenmessgerät verwenden zu können.

Diese Aufgabe wird gemäß einem Aspekt der vorliegenden Erfindung durch eine Magnetkupplung der eingangs genannten Art gelöst, bei der der erste Magnet in der ersten Position an dem ersten Kupplungsteil anhaftet.

Die neue Magnetkupplung verwendet also einen ersten Magneten, vorzugsweise einen Permanentmagneten, der zwischen einer ersten und einer zweiten Position bewegbar ist. Mit anderen Worten wird der Magnet selbst von einer ersten in eine zweite Position gebracht, um die Magnetkupplung zwischen dem geöffneten und dem geschlossenen Zustand umzuschalten. Um zu vermeiden, dass die Magnetkupplung in einem der beiden Zustände mit einem Dauerstrom versorgt werden muss, ist der erste Magnet so angeordnet, dass er zwei stabile Ruhepositionen besitzt, d.h. es handelt sich um eine bistabile Magnetkupplung. Im Gegensatz zu den bekannten bistabilen Magnetbremsen wird der erste Magnet nun jedoch in beiden Positionen aufgrund oder zumindest mit Hilfe seiner Magnetkraft gehalten. In jeder der beiden Positionen haftet der erste Magnet aufgrund seiner Magnetkraft an einem Gegenkörper an. In Folge dessen ist es möglich, auf Federn und andere lagerbelastende Teile zu verzichten. Damit wird eine Beeinträchtigung der Positioniergenauigkeit des bewegten Teils vermieden. Außerdem kann der erste Magnet in beiden Positionen ohne Stromfluss gehalten werden, wenn der erste Magnet als Permanentmagnet ausgebildet ist. Eine unerwünschte Erwärmung der Magnetkupplung lässt sich daher einfach vermieden.

Darüber hinaus ist die neue Magnetkupplung, wie nachfolgend anhand eines bevorzugten Ausführungsbeispiels erläutert, mit sehr wenigen Bauteilen und sehr klein und kompakt realisierbar. Damit eignet sich die neue Magnetkupplung hervorragend zur Integration in ein Drehgelenk, insbesondere in das Drehgelenk eines verschwenkbaren Taststiftes an einem Tastkopf eines Koordinatenmessgerätes.

Die oben genannte Aufgabe ist daher vollständig gelöst.

In einer bevorzugten Ausgestaltung der Erfindung sind das erste und das zweite Kupplungsteil mit einem senkrechten Abstand zueinander angeordnet, und der erste Magnet ist entlang einer Bewegungsachse bewegbar, die in etwa parallel zu dem senkrechten Abstand verläuft.

In dieser Ausgestaltung bewegt sich der erste Magnet entlang einer Bewegungsbahn, die in etwa senkrecht zwischen den beiden Kupplungsteilen verläuft. In Folge dessen trifft der erste Magnet auch etwa senkrecht auf den jeweiligen Gegenkörper, an dem er in der ersten und zweiten Position anhaftet. Die Haltekraft des ersten Magneten wird optimal genutzt, und die beiden Kupplungsteile werden mit einer hohen Positionsgenauigkeit verriegelt.

In einer weiteren Ausgestaltung weist der erste Magnet in Richtung seiner Bewegungsachse eine Höhe auf, die kleiner als der senkrechte Abstand ist.

Diese Ausgestaltung erlaubt es, den ersten Magneten zwischen den beiden Kupplungsteilen anzuordnen. Damit ist eine sehr kleinbauende Realisierung möglich.

In einer weiteren Ausgestaltung besitzt der erste Magnet eine Nord-Süd-Richtung, die in etwa quer zu der Bewegungsachse liegt.

Mit anderen Worten ist der erste Magnet in dieser Ausgestaltung in einer Ebene angeordnet, die etwa parallel zu den beiden Kupplungsteilen liegt. Wenn die beiden Kupplungsteile relativ zueinander verdrehbar sind, wie in dem bevorzugten Anwendungsfall einer Magnetkupplung zum Arretieren eines Drehgelenks, liegt der erste Magnet also mit seinen Polen in Radialrichtung. Diese Ausgestaltung ermöglicht eine besonders kleinbauende und leichte Realisierung.

In einer weiteren Ausgestaltung ist der erste Magnet in einem Flussführungsmantel mit Mantelwänden angeordnet, die in etwa parallel zu der Bewegungsachse verlaufen. In einer besonders bevorzugten Ausgestaltung besteht der Flussführungsmantel aus Mantelwänden, die etwa parallel zu der Bewegungsachse verlaufen, d.h. die stirnseitigen Enden des Flussführungsmantels - in Richtung der Bewegungsachse gesehen - sind frei.

Diese Ausgestaltung ermöglicht die Verwendung eines sehr kleinen und leichten ersten Magneten, weil die Magnetkräfte optimal ausgenutzt werden.

In einer weiteren Ausgestaltung beinhaltet der zweite Magnet eine Erregerspule, die an einem Flussführungsteil angeordnet ist, wobei der erste Magnet in der zweiten Position an dem Flussführungsteil magnetisch anhaftet. Vorzugsweise ist das Flussführungsteil im Querschnitt etwa U-förmig ausgebildet, und die Erregerspule liegt in dem U-förmigen Querschnittsprofil.

In dieser Ausgestaltung ist der zweite Magnet ein Elektromagnet, der an dem ersten Kupplungsteil angeordnet ist. Die Verwendung eines Flussführungsteils besitzt einen doppelten Vorteil. Einerseits werden die Kraftlinien des zweiten Magneten optimal gebündelt, so dass ein relativ kleiner Elektromagnet verwendet werden kann. Außerdem bietet das Flussführungsteil eine optimale Anlage für den ersten Magneten in der ersten Position. Der erste Magnet wird daher sehr sicher in der ersten Position gehalten.

In einer weiteren Ausgestaltung ist der erste Magnet an einem flexiblen Halter befestigt, der zumindest in der ersten Position entspannt ist.

"Entspannt" bedeutet in diesem Zusammenhang, dass der flexible Halter keine nennenswerten Rückwirkungskräfte auf den ersten Magneten und/oder den Ankerpunkt des Halters ausübt. Dadurch werden Lagerungenauigkeiten insbesondere in der ersten Position vermieden, beispielsweise also bei arretiertem Drehgelenk. Dies ist besonders vorteilhaft für den Einsatz der neuen Magnetkupplung an einem Koordinatenmessgerät.

In einer weiteren Ausgestaltung ist der Halter eine membranartige Scheibe mit einem Außenrand, an dem der erste Magnet befestigt ist. Vorzugsweise ist die membranartige Scheibe kreisförmig ausgebildet, und sie kann vollflächig sein oder Ausnehmungen aufweisen.

Diese Ausgestaltung ist besonders vorteilhaft, wenn die beiden Kupplungsteile relativ zueinander drehbar sind, wie das bei einer Magnetkupplung zum Arretieren eines Drehgelenks der Fall sein kann. Eine membranartige Scheibe lässt sich in axialer Richtung sehr weich gestalten, während sie andererseits eine hohe Torsionssteifigkeit bietet. Damit wird eine Axialbelastung der Lager weiter minimiert, während die Kupplungsteile in der ersten Position des ersten Magneten sehr steif miteinander verbunden sind. Darüber hinaus ist diese Ausgestaltung vorteilhaft, wenn der erste Magnet (oder mehrere erste Magnete) am Außenrand der membranartigen Scheibe verteilt sind, da durch die großen radialen Abstände eine hohe Stabilität zur Aufnahme von Torsionskräften erreicht wird.

In einer weiteren Ausgestaltung ist der erste Magnet ein Magnetring, der die membranartige Scheibe umgibt.

Diese Ausgestaltung ermöglicht eine besonders kleinbauende, leichte und trotzdem stabile Realisierung. Darüber hinaus ist die Haltekraft des ersten Magneten in dieser Ausgestaltung besonders gut zur Aufnahme von Torsionskräften geeignet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines Tastkopfes mit einem verschwenkbaren Taststift, wobei der Taststift mit einer Magnetkupplung nach der vorliegenden Erfindung in seiner Schwenkposition arretiert wird,
- Fig. 2: ein bevorzugtes Ausführungsbeispiel der neuen Magnetkupplung in einer geschnittenen Seitenansicht, wobei sich der erste Magnet in seiner zweiten Position befindet, und
- Fig. 3: das Ausführungsbeispiel aus Fig. 2, wobei sich der erste Magnet in seiner ersten Position befindet.

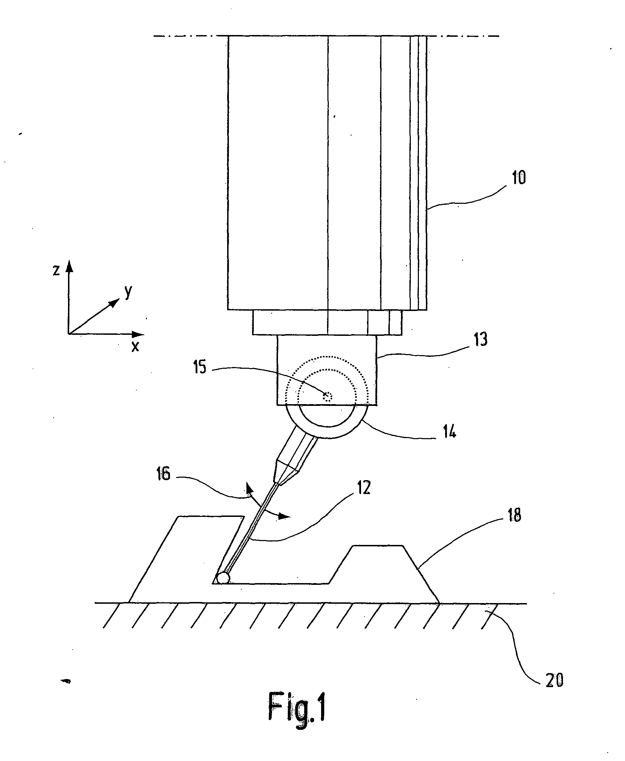

In Fig. 1 ist der Tastkopf eines an sich bekannten Koordinatenmessgerätes mit der Bezugsziffer 10 bezeichnet. Das Koordinatenmessgerät 10 (hier nicht näher dargestellt) besitzt eine Verschiebemechanik, mit deren Hilfe der Tastkopf 10 in drei senkrechten Raumrichtungen x, y, z verfahren werden kann. Am unteren freien Ende des Tastkopfes 10 ist ein Taststift 12 an einer Basis 13 angeordnet. Der Taststift 12 ist hier über ein Drehgelenk 14 mit der Basis 13 verbunden. Aufgrund des Drehgelenks 14 kann der Taststift 12 um eine Drehachse 15 verschwenkt werden, wie dies mit einem Pfeil 16 symbolisch angedeutet ist. Ergänzend hierzu kann der Tastkopf auch noch um die z-Achse gedreht werden, so dass der Taststift 12 einen etwa halbkugelförmigen Raumbereich überstreichen kann.

Der Tastkopf 10 mit dem Taststift 12 dient hier in an sich bekannter Weise dazu, einzelne Raumkoordinaten und/oder geometrische Abmessungen eines Messobjekts 18 zu vermessen. Das Messobjekt 18 ist auf einem Messtisch 20 angeordnet. Eine Verschwenkung des Taststiftes 12 um die Drehachse 15 ermöglicht es, Messpunkte in Hinterschneidungen anzutasten, wie dies in Fig. 1 vereinfacht dargestellt ist.

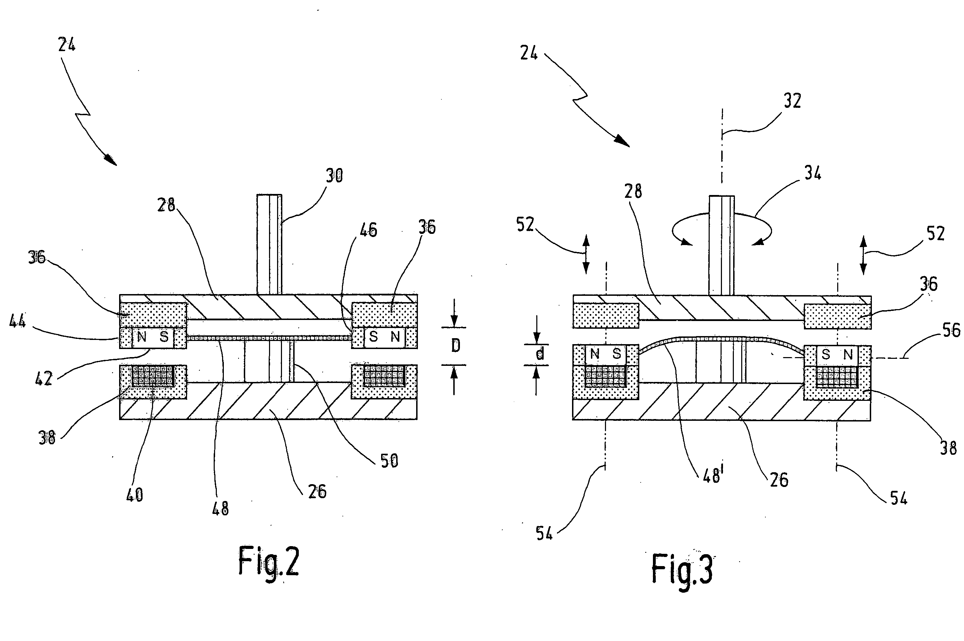

Die Figuren 2 und 3 zeigen ein bevorzugtes Ausführungsbeispiel einer Magnetkupplung 24, die in dem Drehgelenk 14 verwendet wird, um den Taststift 12 in einer definierten Schwenkposition zu arretieren. Genau genommen handelt es sich daher nicht um eine Kupplung, sondern um eine Klemmvorrichtung und/oder um eine Bremse. Wie eingangs angedeutet, ist die vorliegende Erfindung jedoch nicht auf diesen bevorzugten Anwendungsfall beschränkt. Sie kann ebenso bei "echten" Kupplungen zum Übertragen einer Drehbewegung und/oder zum Bremsen einer drehbaren Welle eingesetzt werden. Darüber hinaus kann die vorliegende Erfindung auch verwendet werden, um zwei translatorisch gegeneinander bewegte Teile miteinander zu koppeln.

Die Magnetkupplung 24 besitzt ein erstes Kupplungsteil 26 und ein zweites Kupplungsteil 28, die hier jeweils als kreisförmige Scheiben ausgebildet sind. Das zweite Kupplungsteil 28 ist mit einer Welle 30 verbunden, die eine Drehbewegung um eine Drehachse 32 ausführen kann, wie dies mit einem Pfeil 34 (Fig. 3) dargestellt ist. Das erste Kupplungsteil 26 ist hier feststehend, um das zweite Kupplungsteil 28 in einer definierten Drehposition zu arretieren. In dem bevorzugten Anwendungsfall gemäß Fig. 1 ist die Welle 30 mit dem Taststift 12 verbunden, so dass die Schwenkposition des Taststiftes 12 über eine Kopplung des ersten Kupplungsteils 26 mit dem zweiten Kupplungsteil 28 arretiert werden kann.

Alternativ hierzu könnte jedoch auch das erste Kupplungsteil 26 drehbar sein, während das zweite Kupplungsteil 28 feststehend ist, oder es könnten beide Kupplungsteile 26, 28 drehbar gelagert sein.

Die beiden Kupplungsteile 26, 28 sind in einem senkrechten Abstand D voneinander angeordnet, so dass ein Zwischenraum zwischen den aufeinander zuweisenden Stirnseiten der Kupplungsteile 26, 28 verbleibt. An der zum Zwischenraum weisenden Stirnseite des zweiten Kupplungsteils 28 ist eine ringförmige Bremsscheibe 36 angeordnet. Die Bremsscheibe 36 bildet einen ringförmigen Außenrand, der zu dem ersten Kupplungsteil 26 zeigt.

An der zum Zwischenraum zeigenden Stirnseite des ersten Kupplungsteils ist ein ringförmiges Flussführungsteil 38 angeordnet, das im Profil einen U-förmigen Querschnitt besitzt. Das Flussführungsteil 38 ist parallel zu und gegenüber von der Bremsscheibe 36 angeordnet, wobei der senkrechte Abstand D hier zwischen den aufeinander zuweisenden Flächen der Bremsscheibe 36 und des Flussführungsteils 38 gemessen ist.

Sowohl die Bremsscheibe 36 als auch das Flussführungsteil 38 sind hier aus einem ferromagnetischen Material, insbesondere aus Weicheisen hergestellt, d.h. aus einem Material mit einer hohen Permeabilität. In dem U-förmigen Profil des Flussführungsteils 38 ist eine ringförmige Erregerspule 40 angeordnet, die zusammen mit dem Flussführungsteil 38 einen Elektromagneten bildet.

Mit der Bezugsziffer 42 ist ein ringförmiger Permanentmagnet bezeichnet. Der Permanentmagnet 42 ist außen von einem Außenring 44 umgeben, an seiner radialen Innenseite liegt der Permanentmagnet 42 an einem Innenring 46 an. Der Außenring 44 und der Innenring 46 sind ebenfalls aus einem ferromagnetischen Material mit einer hohen Permeabilität hergestellt. Sie bilden einen Flussführungsmantel, der den Permanentmagnet 42 radial außen und radial innen umgibt. Die in Richtung des senkrechten Abstandes D liegenden Stirnseiten des Permanentmagneten 40 sind offen.

Der Permanentmagnet 42 ist über seinen Innenring 46 an einer Membran 48 befestigt, die auf einem Zapfen 50 gelagert ist. Der Zapfen 50 ist drehfest mit dem ersten Kupplungsteil 26 verbunden. Die Membran 48 ist in Axialrichtung weich und kann sich daher verbiegen, wie dies in Fig. 3 dargestellt ist. Gegenüber Torsionskräften, die in dem dargestellten Ausführungsbeispiel über das zweite Kupplungsteil 28 ausgeübt werden können, ist die Membran 48 jedoch steif. Letzteres gilt insbesondere, wenn sich die Membran 48 in einem ebenen, entspannten Zustand befindet, wie dies in Fig. 2 dargestellt ist.

Der Permanentmagnet 42 besitzt eine Höhe d in Axialrichtung, die geringfügig kleiner als der senkrechte Abstand D zwischen den beiden Kupplungsteilen 26, 28 ist. Dadurch kann sich der Permanentmagnet 42 (zusammen mit dem Außenring 44 und dem Innenring 46) in Axialrichtung bewegen, wie dies anhand der Pfeile 52 in Fig. 3 angedeutet ist. Die Bewegungsachse des Permanentmagneten 42 ist mit der Bezugsziffer 54 bezeichnet und liegt in etwa parallel zu der Drehachse 32 und dem senkrechten Abstand D. (Die Fachleute werden erkennen, dass sich der Permanentmagnet 42 aufgrund der dargestellten Lagerung an der Membran 48 nicht auf einer exakt geraden Bewegungsachse 54 bewegt. Vielmehr ist die Bewegungsbahn des Permanentmagneten 42 geringfügig gekrümmt, und zwar um den Auflagepunkt der Membran 48 auf dem Zapfen 50. Die Krümmung der Bewegungsbahn spielt aufgrund der geringen Hübe des Permanentmagneten 42 in dem Zwischenraum jedoch keine nennenswerte Rolle.)

Die Höhe d des Permanentmagneten 42 und die Höhe des Zapfens 50 sind in dem bevorzugten Ausführungsbeispiel so dimensioniert, dass der Permanentmagnet 42 mit seinem Außenring 44 und seinem Innenring 46 an der Bremsscheibe 36 magnetisch anhaftet, wenn sich die Membran 48 in ihrem entspannten, flachen Zustand befindet. In dieser (zweiten) Position ist die Drehbewegung 34 des zweiten Kupplungsteils 28 aufgrund der magnetischen Anziehungskraft und der Reibung gehemmt (Fig. 2).

Demgegenüber befindet sich der Permanentmagnet 42 mit seinem Außenring 44 und seinem Innenring 46 in Fig. 3 in seiner ersten Position. Er haftet in diesem Fall über den Außenring 44 und den Innenring 46 an dem Flussführungsteil 38 an, das die Erregerspule 40 U-förmig umgibt. Das zweite Kupplungsteil 28 kann sich nun frei um die Drehachse 32 drehen.

Der Positionswechsel des Magnetrings 42 wird mit Hilfe des Elektromagneten 38/40 bewirkt. Wenn sich der Magnetring 42 in seiner ersten Position befindet (Fig. 3), kann durch Bestromen der Erregerspule 40 ein sekundäres Magnetfeld in dem Flussführungsteil 38 und dem anliegenden Außenring 44 und Innenring 46 erzeugt werden, das das magnetische Feld des Permanentmagneten 42 abschwächt und sogar zu einer magnetischen Abstoßung führt. Der Magnetring 42 überwindet dann den Luftspalt zur Bremsscheibe 36 und haftet an dieser magnetisch an, sobald er in Kontakt kommt. Nun kann die Bestromung der Erregerspule 40 beendet werden, d.h. es genügt ein kurzer Stromimpuls, um den Magnetring 42 von seiner ersten Position (Fig. 3) in seine zweite Position (Fig. 2) zu bewegen.

Umgekehrt kann der Magnetring 42 durch eine entgegengesetzte Bestromung der Erregerspule 40 in die in Fig. 3 dargestellte, erste Position gezogen werden. Da die magnetischen Feldlinien des Permanentmagneten 42 nun über das Flussführungsteil 38 (sowie den Außenring 44 und den Innenring 46) geschlossen werden, haftet der Magnetring 42 an dem ersten Kupplungsteil 26. Es genügt also auch in diesem Fall ein kurzer Stromimpuls, um den Magnetring 42 von der zweiten in die erste Position zu bringen.

Wie in den Fig. 2 und 3 dargestellt ist, besitzt der Permanentmagnet 42 (d.h. der Magnetring) eine Nord-Süd-Richtung 56, die in etwa parallel zu der entspannten Membran 48 und somit etwa senkrecht zur Bewegungsachse 54 liegt. Mit anderen Worten sind die Pole des Permanentmagneten 42 radial ausgerichtet, wodurch eine besonders kleinbauende Realisierung erreicht wird. Abweichend hiervon könnte der Permanentmagnet 42 jedoch auch mit einer axialen Nord-Süd-Richtung (hier nicht dargestellt) angeordnet sein.

In dem bevorzugten Ausführungsbeispiel ist die Membran 48 in Axialrichtung relativ weich, sie besitzt jedoch keine nennenswerte Federwirkung. Abweichend hiervon könnte die Membran 48 auch eine Schnappscheibe sein, die zwei stabile Zustände besitzt. Um eine Lagerbelastung bei der Klemmung des drehbaren Kupplungsteils 28 zu verhindern, sollte die Membran 48 jedoch auch in diesem Fall spannungsfrei sein, wenn der Magnetring 42 an der Bremsscheibe 36 anhaftet. Demgegenüber ist eine Federspannung in der ersten Position des Magnetrings 42 akzeptabel, sofern die dadurch erzeugte Federkraft nicht die Haltekraft des Magnetrings 42 an dem Flussführungsteil 38 übersteigt.

In dem bevorzugten Ausführungsbeispiel sind die Bremsscheibe 36, die Magnetanordnung 42, 44, 46 und der Elektromagnet 38, 40 jeweils ringförmig ausgebildet und am Außenumfang zweier parallel zueinander angeordneter Kupplungsscheiben 26, 28 und an der Membran 48 angeordnet. Alternativ hierzu könnte jedoch auch eine Vielzahl von einzelnen Permanentmagneten 42 an einem sternförmigen Träger angeordnet sein. Ebenso könnten die Bremsscheibe 36 und/oder der Elektromagnet 38, 40 aus einzelnen Segmenten bestehen, die mit einzelnen Permanentmagneten zusammenwirken.

Darüber hinaus ist es zwar bevorzugt, jedoch nicht zwingend erforderlich, dass ein Permanentmagnet als erster Magnet im Sinne der vorliegenden Erfindung verwendet wird. Alternativ hierzu könnte auch der erste Magnet ein Elektromagnet sein, was jedoch eine andauernde Bestromung und eine damit verbundene Erwärmung zur Folge hätte. Andererseits könnte der Elektromagnet 38/40 durch einen zweiten Permanentmagneten (hier nicht dargestellt) ergänzt werden, um eine magnetische Vorspannung in der einen oder anderen Richtung zu erreichen.

## Patentansprüche

1. Magnetkupplung, insbesondere zum Arretieren eines Drehgelenks (14) bei einem Koordinatenmessgerät, mit einem ersten Kupplungsteil (26) und einem relativ dazu beweglichen zweiten Kupplungsteil (28), mit zumindest einem ersten Magneten (42), der an dem ersten Kupplungsteil derart angeordnet ist, dass er zwischen einer ersten und einer zweiten Position bewegbar ist, wobei der erste Magnet (42) in der zweiten Position an dem zweiten Kupplungsteil (28) magnetisch anhaftet, um eine Haltekraft zwischen dem ersten und dem zweiten Kupplungsteil (26, 28) zu erzeugen, und mit einem zweiten Magneten (38, 40), der dazu ausgebildet ist, den ersten Magneten (42) in zumindest eine der Positionen zu bewegen, **dadurch gekennzeichnet, dass** der erste Magnet (42) in der ersten Position an dem ersten Kupplungsteil (26) anhaftet.

2. Magnetkupplung nach Anspruch 1, **dadurch gekennzeichnet, dass** das erste und das zweite Kupplungsteil (26, 28) mit einem senkrechten Abstand (D) zueinander angeordnet sind, und dass der erste Magnet (42) entlang einer Bewegungsachse (54) bewegbar ist, die in etwa parallel zu dem senkrechten Abstand (D) verläuft.

3. Magnetkupplung nach Anspruch 2, **dadurch gekennzeichnet, dass** der erste Magnet (42) in Richtung seiner Bewegungsachse (54) eine Höhe (d) aufweist, die kleiner als der senkrechte Abstand (D) ist.

4. Magnetkupplung nach Anspruch 2 oder 3, **dadurch gekennzeichnet, dass** der erste Magnet (42) eine Nord-Süd-Richtung (56) besitzt, die in etwa quer zu der Bewegungsachse (54) liegt.

5. Magnetkupplung nach einem der Ansprüche 2 bis 4, **dadurch gekennzeichnet, dass** der erste Magnet (42) in einem Flussführungsmantel mit Mantelwänden (44, 46) angeordnet ist, die in etwa parallel zu der Bewegungsachse (54) verlaufen.

6. Magnetkupplung nach einem der Ansprüche 1 bis 5, **dadurch gekennzeichnet, dass** der zweite Magnet eine Erregerspule (40) beinhaltet, die an einem Flussführungsteil (38) angeordnet ist, wobei der erste Magnet (42) in der zweiten Position an dem Flussführungsteil (38) magnetisch anhaftet.

7. Magnetkupplung nach einem der Ansprüche 1 bis 6, **dadurch gekennzeichnet, dass** der erste Magnet (42) an einem flexiblen Halter (48) befestigt ist, der zumindest in der ersten Position entspannt ist.

8. Magnetkupplung nach Anspruch 7, **dadurch gekennzeichnet, dass** der Halter (48) eine membranartige Scheibe mit einem Außenrand ist, an dem der erste Magnet (42) befestigt ist.

9. Magnetkupplung nach Anspruch 7 oder 8, **dadurch gekennzeichnet, dass** der erste Magnet (42) ein Magnetring ist, der die membranartige Scheibe (48) umgibt.

10. Tastkopf für ein Koordinatenmessgerät, mit einer Basis (13) und einem Messtaster (12), der über ein Drehgelenk (14) drehbar an der Basis (13) angeordnet ist, **dadurch gekennzeichnet, dass** das Drehgelenk (14) eine Magnetkupplung (24) nach einem der Ansprüche 1 bis 9 beinhaltet.
